(19) Europäisches Patentamt
European Patent Office
Office européen des brevets

(11) Veröffentlichungsnummer : **0 120 255**
**B1**

(12) **EUROPÄISCHE PATENTSCHRIFT**

(45) Veröffentlichungstag der Patentschrift : **15.04.87**

(51) Int. Cl.[4] : **C 09 B 62/01**, C 09 B 62/012, D 06 P 3/66, D 06 P 3/10

(21) Anmeldenummer : **84101436.8**

(22) Anmeldetag : **13.02.84**

(54) **Reaktivfarbstoffe.**

(30) Priorität : **25.02.83 DE 3306696**

(43) Veröffentlichungstag der Anmeldung : **03.10.84 Patentblatt 84/40**

(45) Bekanntmachung des Hinweises auf die Patenterteilung : **15.04.87 Patentblatt 87/16**

(84) Benannte Vertragsstaaten : **CH DE FR GB LI**

(56) Entgegenhaltungen :
**FR-A- 1 366 546**
**GB-A- 998 358**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Henk, Hermann, Dr.**
**Roggendorfstrasse 55**
**D-5000 Köln 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 120 255 B1

**Beschreibung**

Gegenstand der vorliegenden Erfindung sind Reaktivfarbstoffe der Formel

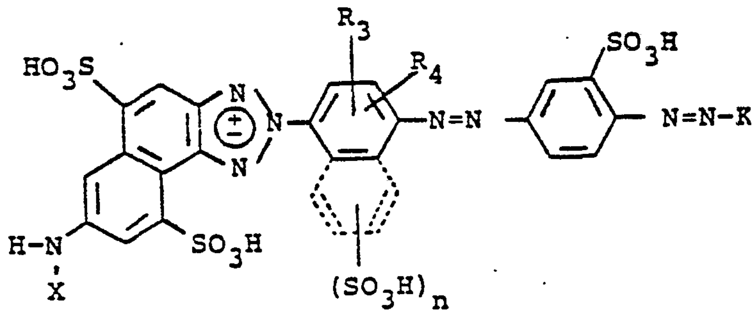

(I)

worin

$R_3$, $R_4$ = H, $C_1$-$C_4$-Alkyl, $C_1$-$C_4$-Alkoxy
X = faserreaktiver Rest der Triazin- oder Pyrimidinreihe
K = Rest einer Kupplungskomponente oder Pyridon- oder Pyrimidonreihe
n = 0 oder 1,

insbesondere solche der Formel

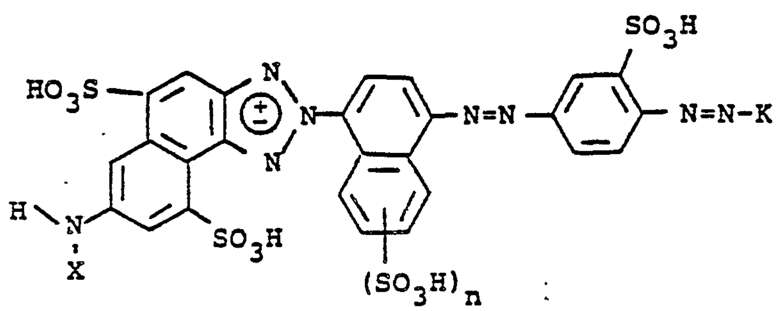

(II)

worin X, K und n die in Anspruch 1 angegebene Bedeutung haben, und solche der Formel

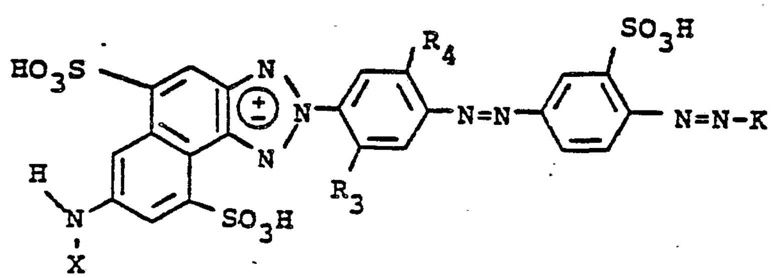

(III)

worin X, $R_3$, $R_4$ und K die in Anspruch 1 angegebene Bedeutung haben, sowie deren Verwendung zum Färben und Bedrucken von OH- oder NH-gruppenhaltigen Fasermaterialien.

Geeignete faserreaktive Reste sind beispielsweise :

Mono- oder Dihalogen-symmetrische-triazinylreste, z. B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 2-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder Methoxyphenyl)-oxy-4-chlor-triazinyl-6-, 2-Alkylmercapto- oder 2-Alkylmercapto- oder 2-(substituiertes Aryl)-mercapto-4-chlortriazinyl-6-, wie 2-β-Hydroxyethylmercapto-4-chlortriazinyl-6-, 2-Phenylmercapto-4-chlortriazinyl-6-, 3-(4′-Methylphenyl)-mercapto-4-chlortriazinyl-6-, 2-(2′,4′-Dinitro)-phenylmercapto-4-chlortriazinyl-6-, 2-Methyl-4-chlor-triazinyl-6-, 2-Phenyl-4-chlor-triazinyl-6, 2,4-Difluortriazinyl-6, Monofluortriazinylreste, die durch Amino-, Alkylamino-, Aralkylamino, Acylaminogruppen substituiert sind, wobei Alkyl, insbesondere gegebenenfalls substituiertes $C_1$-$C_4$-Alkyl, Aralkyl, insbesondere gegebenenfalls substituiertes Phenyl-, $C_1$-$C_4$-Alkyl und Aryl, insbesondere gegebenenfalls durch Sulfo-, Alkyl-, insbesondere $C_1$-$C_4$-Alkyl, Alkoxy-, insbesondere $C_1$-$C_4$-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluortriazinyl-6,
2-β-Sulfoethyl-methylamino-4-fluor-triazinyl-6,
2-Carboxymethylamino-4-fluor-triazinyl-6,
2-β-Cyanethylamino-4-fluor-triazinyl-6,
2-Benzylamino-4-fluor-triazinyl-6,
2-β-Phenylethylamino-4-fluor-triazinyl-6,
2-Benzyl-methylamino-4-fluor-triazinyl-6,
2-(x-Sulfo-benzyl)-amino-4-fluor-triazinyl-6,
2-Cyclohexylamino-4-fluor-triazinyl-6,
2-(o-, m-, p-Methylphenyl)-amino-4-fluor-triazinyl-6,
2-(o-, m-, p-Sulfophenyl)-amino-4-fluor-triazinyl-6,
2-(2',5'-Disulfophenyl)-amino-4-fluor-triazinyl-6,
2-(o-, m-, p-Chlorphenyl)-amino-4-fluor-triazinyl-6,
2-(o-, m-, p-Methoxyphenyl)-4-fluor-triazinyl-6,
2-(2'-Methyl-4'-sulfophenyl)-amino-4-fluor-triazinyl-6,
2-(2'-Methyl-5'-sulfophenyl)-amino-4-fluor-triazinyl-6,
2-(2'-Chlor-4'-sulfophenyl)-amino-4-fluor-triazinyl-6,
2-(2'-Chlor-5'-sulfophenyl)-amino-4-fluor-triazinyl-6,
2-(2'-Methoxy-4'-sulfophenyl)-amino-4-fluor-triazinyl-6,
2-(o-, m-, p-Carboxyphenyl)-amino-4-fluor-triazinyl-6,
2-(2',4'-Disulfophenyl)-amino-4-fluor-triazinyl-6,
2-(3',5'-Disulfophenyl)-amino-4-fluor-triazinyl-6,
2-(2'-Carboxy-4-sulfophenyl)-amino-4-fluor-triazinyl-6,
2-(6'-Sulfonaphthyl-(2'))-amino-4-fluor-triazinyl-6,
2-(4',8'-Disulfonaphthyl-(2'))-amino-4-fluor-triazinyl-6,
2-(6',8'-Disulfonaphthyl-(2'))-amino-4-fluor-triazinyl-6,
2-(N-Methylphenyl)-amino-4-fluor-triazinyl-6,
2-(N-ethylphenyl)-amino-4-fluor-triazinyl-6,
2-(N-β-Hydroxyethylphenyl)-amino-4-fluor-triazinyl-6,
2-(N-iso-Propylphenyl)-amino-4-fluor-triazinyl-6,
2-Morpholino-4-fluor-triazinyl-6,
2-Piperidino-4-fluor-triazinyl-6,
2-(4',6',8'-Trisulfonaphthyl-(2'))-4-fluor-triazinyl-6,
2-(3',6',8'-Trisulfonaphthyl-(2'))-4-fluor-triazinyl-6,
2-(3',6'-Disulfonaphthyl-(1'))-4-fluor-triazinyl-6, Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono- -die- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-Methyl-N-(2,4-Dichlortriazinyl-6-)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- oder N-Ethyl-N-(2,4-dichlortriazinyl-6-)-aminoacetyl-,

sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6- carbomethoxy-4-pyrimidinyl-, 2,6-Difluor-5-trifluormethyl-4-pyrimidinyl ; sulfonylgruppenhaltoge Triazinreste, wie 2,4-Bis-(phenylsulfonyl)-triazinyl-6-, 2-(3′-Carboxyphenyl)- sulfonyl-4-chlortriazinyl-6-, 2-(3′-Sulfophenyl)-sulfonyl-4-chlortriazinyl-6-, 2,4-Bis-(3′-carboxyphenylsulfonyl-)-triazinyl-6 ; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methyl-pyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl- ; ammoniumgruppenhaltige Triazinringe, wie 2-Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-Phenylamino- oder 4-(sulfophenylamino)-triazinyl-6-Reste, die in 2-Stellung über eine Stickstoffbindung das 1,4-Bisazabicyclo-[2,2,2]-octan oder das 1,2-Bis-aza-bicyclo-[0,3,3]-octan quartär gebunden enthalten, 2-Pyridinium-4-phenylamino- oder -4-(o-, m- oder p-sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino-, oder Alkoxy-, wie Methoxy- oder Alkoxy-, oder Aroxy-, wie Phenoxy- oder Sulfophenoxy-Gruppen substituiert sind ;

Geeignete Kupplungskomponenten sind beispielsweise

1,4-Dimethyl-2-hydroxy-pyridon-(6) ; 1,4-Dimethyl-2-hydroxypyridon-(6)-5-carbonsäureamid, -5-sulfonsäure und -5-methansulfonsäure ; 2-Hydroxypyridon-(6) ; 2-Hydroxypyridon-(6)-4-carbonsäure ; 1-Methyl-2,4-dihydroxypyridon-(6)-5-carbonsäuremethylamid ; 4,6-Dihydroxy-2-mercapto-pyridin ; 4-Amino-2,6-dihydroxypyrimidin ; 2-Cyanamino-4,6-dihydroxypyrimidin ; 2-Amino-4,6-dihydroxypyrimidin ; 4-Amino-6-hydroxy-2-mercaptopyridin ; 1-Methyl-2-hydroxy-4-methyl-5-cyan-pyridon-(6) ; 1-Phenyl-2-hydroxy-4-methyl-5-cyan-pyridon-(6) ; 2,4,6-Trihydroxypyrimidin ; 2-Methyl-4,6-dihydroxy-pyrimidin ; 2-Phenyl-4-amino-6-hydroxy-pyrimidin ; 2-Phenyl-4,6-dihydroxy-pyrimidin.

Die Farbstoffe der allgemeinen Formel (I) können auf unterschiedlichen Wegen hergestellt werden. Die Synthese erfordert dreimaliges Diazotieren und Kuppeln, eine Triazolierung, gegebenenfalls Verseifung von Acylaminogruppen bzw. Reduktion von Nitrogruppen, sowie eine Umsetzung mit einem faserreaktiven Rest X-Halogen. Dabei können die Triazolgruppierung und die beiden Azobrücken in beliebiger Reihenfolge hergestellt werden. Die Umsetzung mit einem faserreaktiven Rest X-Halogen erfolgt zweckmäßigerweise vor- oder nach einer Kupplung, in jedem Falle aber nach der Triazolierung.

Die Farbstoffe (I) erhält man beispielsweise durch Diazotierung von Verbindungen der Formel

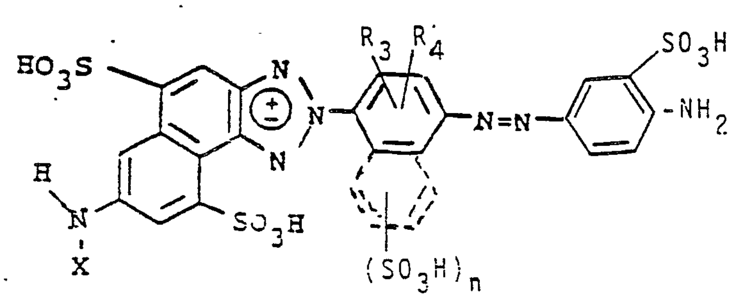

(IV)

und Kupplung mit Kupplungskomponenten K-H.

Weiterhin lassen sich die Farbstoffe (I) herstellen, indem man eine Verbindung

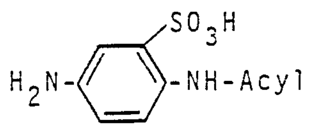 oder 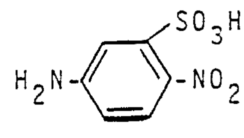

(V) (VI)

wobei Acyl : Acylrest mit 1-10 C-Atomen, insbes. Formyl, Acetyl, Benzoyl, diazotiert und auf Verbindungen

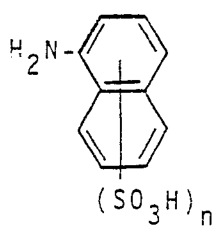 bzw. 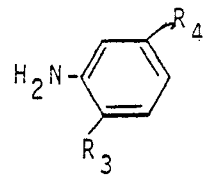

(VII) (VIII)

kuppelt, die erhaltenen Monoazofarbstoffe weiterdiazotiert und auf Verbindungen der Formel

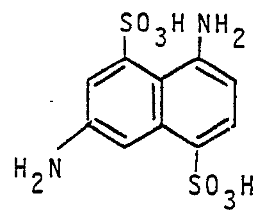

(IX)

kuppelt und triazotiert. Nach Verseifung der Acylaminogruppe in (V) bzw. Reduktion der Nitrogruppe in (VI) erhält man Diaminomonoazotriazole der Formeln

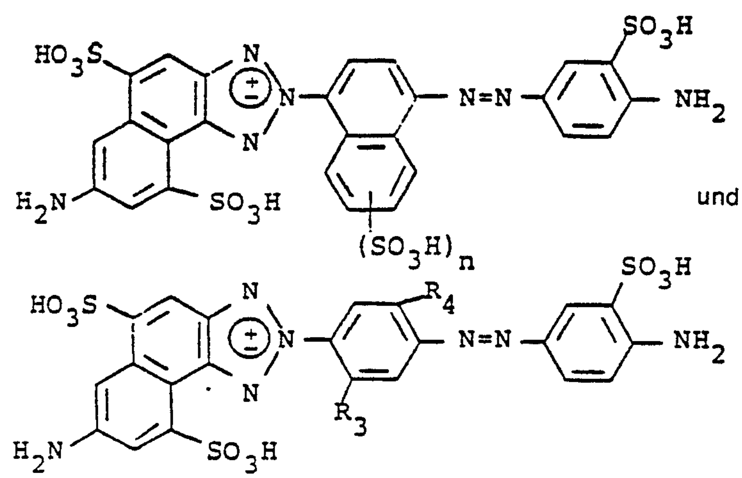

(X)

und

(XI)

Die Umsetzung mit einer Reaktivkomponente X-Halogen und die nachfolgende Diazotierung und Kupplung auf eine Komponente K-H führt dann zu den Farbstoffen (II) und (III).

Ebenso können Farbstoffe der Formel (I) hergestellt werden, indem man einen Disazofarbstoff der Formel

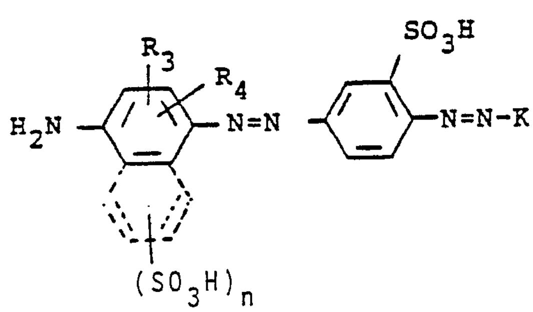

(XII)

der über entsprechende Acylamino- bzw. Nitro-Vorläufer leicht zugänglich ist, diazotiert, auf Verbindungen der Formeln (IX) kuppelt, triazoliert und anschließend mit einer Reaktivkomponente X-Halogen umsetzt.

Die neuen Farbstoffe eignen sich besonders zum Färben und Bedrucken von natürlichen und regenerierten Cellulosefasermaterialien wie Baumwolle und Zellwolle sowie von natürlichen und synthetischen Polyamidfasermaterialien, beispielsweise solchen aus Wolle, Seide, Poly-ε-Caprolactam oder dem Polykondensat von Hexamethylendiamin und Adipinsäure. Die erhaltenen Färbungen, insbesondere solche auf Baumwolle und Zellwolle, zeichnen sich durch gute Echtheitseigenschaften aus, insbesondere Naß- und Lichtechtheiten.

Bei den im folgenden angegebenen Prozentwerten handelt es sich, falls nicht anders angegeben, um Gewichtsprozente.

In der EP-A 50 266 werden Disazoreaktivarbstoffe beschrieben, die zwar auch einen Naphthotriazolring enthalten, dieser ist jedoch mittelständig und nicht endständig, wie bei den erfindungsgemäßen Farbstoffen und enthält auch nicht der Reaktivrest. Gegenüber diesem Stand der Technik weisen die erfindungsgemäßen Farbstoffe überraschende Vorteile in der Lichtechtheit auf.

In der GB-A 998 358 werden Monoazofarbstoffe mit reaktivgruppenhaltigem Naphthotriazolrest beschrieben und in der FR-A 13 66 546 Reaktiv-Disazofarbstoffe mit Naphthotriazolrest, welche den Rest einer Diazokomponente der Benzol- oder Naphthalinreihe als Endkomponente enthalten.

## Beispiel 1

26 g 4-Oxalylamino-3-sulfo-anilin werden in 400 ml Wasser neutral gelöst, mit 70 ml einer 10 %igen Nitritlösung versetzt und bei 0-5 °C mit 30 ml einer 30 %igen Salzsäure diazotiert. Der Nitritüberschuß wird nach 30 Minuten mit wenig Amidosulfonsäure zerstört. Diese Suspension der Diazotierung läßt man zu einer neutralen Lösung von 22,5 g 1-Naphthylamin-6-sulfonsäure in 110 ml Wasser einfließen und hält gleichzeitig mit Sodalösung einen pH-Wert ≤ 7. Die Kupplung ist rasch beendet. Es werden erneut 70 ml einer 10 %igen Nitritlösung zugesetzt. Diese Lösung läßt man in eine Vorlage aus 30 ml einer 30 %igen Salzsäure und 200 g Eis einfließen. Es wird 1 Stunde nachgerührt und der Nitritüberschuß mit Amidosulfonsäure zerstört. Diese Diazo-Suspension läßt man zu einer neutralen Lösung von 33 g 1,6-Diaminonaphthalin-4,8-disulfonsäure in 120 ml Wasser einfließen und hält erneut mit Sodalösung gleichzeitig einen pH-Wert von ≤ 7. Nach beendeter Kupplung wird auf 80 bis 90 °C erhitzt und durch Zugabe von 56 g Kupfersulfat und 90 ml Ammoniak (25 %ig) triazoliert. Nach beendeter Triazolierung wird mit 10 Vol.-% Natronlauge 40 % versetzt und 1 Stunde bei 80 bis 90 °C die Oxalylgruppe vollständig verseift. Es wird heiß filtriert und das Triazol mit Salz ausgeschieden und bei Raumtemperatur abgesaugt. Man erhält ca. 150 g Paste eines Diamino-monoazo-triazols, welches in Form der freien Säure der folgenden Formel entspricht:

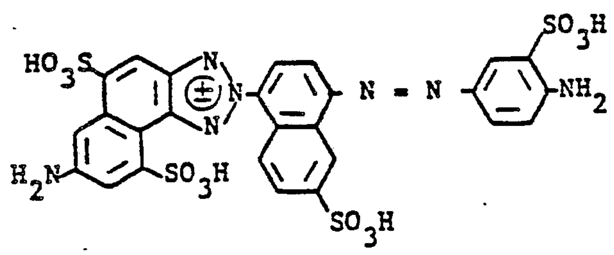

## Beispiel 2

26 g 4-Oxalylamino-3-sulfo-anilin werden diazotiert wie in Beispiel 1. Zu der Suspension der Diazotierung tropft man in der Kälte 10,7 g 3-Methylanilin ohne Lösungsmittel. Mit Sodalösung wird über einen Zeitraum von mehreren Stunden der pH-Wert auf 7 angehoben. Die Weiterdiazotierung dieses Aminomonoazofarbstoffes, die Kupplung auf 1,6-Diaminonaphthalin-4,8-disulfonsäure, die Triazolierung, Verseifung und Isolierung erfolgt analog Beispiel 1. Man erhält ca. 140 g Paste eines Diaminomonoazotriazols, welches in Form der freien Säure der folgenden Formel entspricht:

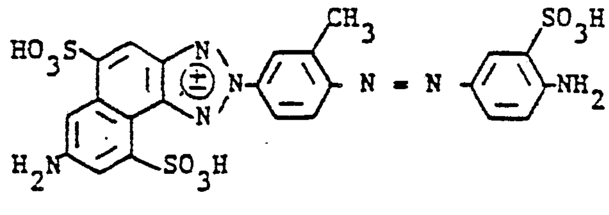

Beispiel 3

Die gesamte Paste aus Beispiel 1 wird in 1 000 ml Wasser heiß gelöst und mit Eis auf Raumtemperatur abgekühlt. Man läßt bei Raumtemperatur 9 ml 2,4,6-Trifluor-5-chlor-pyrimidin eintropfen. Durch Zugabe von Soda wird der pH konstant gehalten. Nach beendeter Reaktion versetzt man mit 18 ml einer 30 %igen Nitritlösung, kühlt mit Eis auf 10 °C und stellt mit Salzsäure kongosauer. Nach einer Rührzeit von 30 Minuten wird der Nitritüberschuß mit Amidosulfonsäure zerstört. Es werden 13 g 2-Hydroxypyridon-(6)-4-carbonsäure eingestreut. Anschließend wird mit Sodalösung langsam pH 7 eingestellt. Die Kupplung ist rasch beendet, es wird abgesaugt und im Vakuum getrocknet. Der Farbstoffe entspricht in Form der freien Säure der Formel

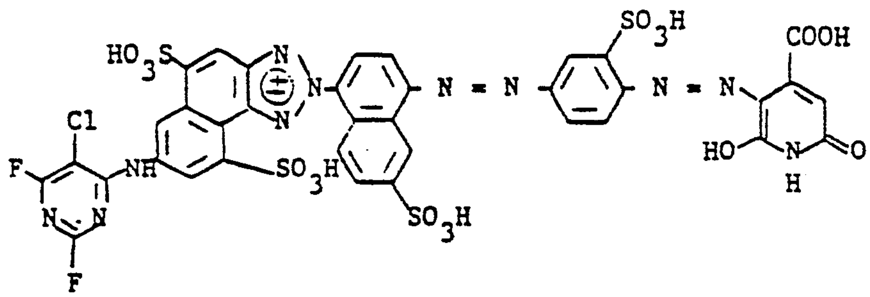

($\lambda_{max}$ = 470 nm)

Er liefert auf Baumwolle und Zellwolle scharlachfarbene Drucke und Färbungen von sehr guter Naß- und Lichtechtheit.

Beispiel 4

Ersetzt man in Beispiel 3 das Triazol aus Beispiel 1 durch das aus Beispiel 2 und verfährt im übrigen nach den Angaben aus Beispiel 3, so erhält man einen Farbstoff, der in Form der freien Säure der folgenden Formel entspricht :

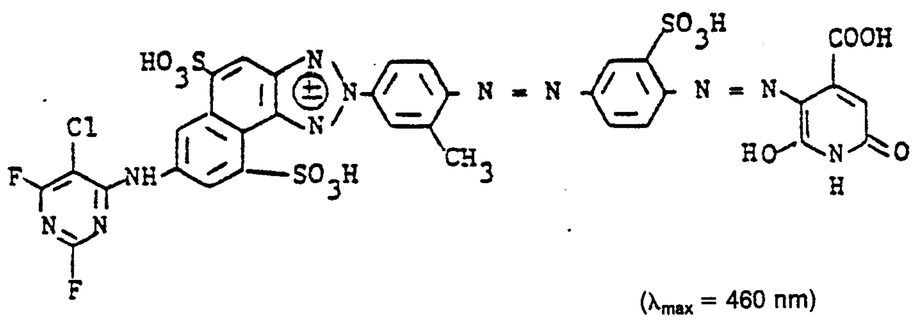

($\lambda_{max}$ = 460 nm)

Er liefert auf Baumwolle und Zellwolle orangefarbene Drucke und Färbungen von sehr guter Naß- und Lichtechtheit.

Beispiel 5

Verwendet man statt des Triazols aus Beispiel 3, die in Tabelle 1, Kolonne 1 genannten Triazole statt des 2,4,6-Trifluor-5-chlorpyrimidins aus Beispiel 3 die in Tabelle 1, Kolonne 2 genannten Reaktivgruppen und statt 2-Hydroxypyridon-(6)-4-carbonsäure aus Beispiel 3 die in Tabelle 1, Kolonne 3 genannten Kupplungskomponenten, so erhält man ebenfalls neue, sehr wertvolle Reaktivfarbstoffe, deren Nuance in Kolonne 4 angegeben ist.

(Siehe Tabelle 1 Seite 8 f.)

Tabelle 1

| Kolonne 1 | Kolonne 2 | Kolonne 3 | Kolonne 4 | |
|---|---|---|---|---|
| Diazino-triazol aus Bsp. Nr. | Reaktiv-gruppe | Kupplungs-komponente | Nuance auf Baumwolle | $\lambda_{max}$ [nm] |
| 1 | 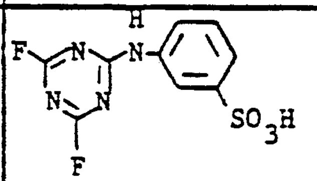 | 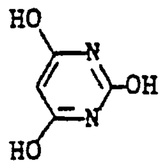 | gelb | 440 |
| 2 | 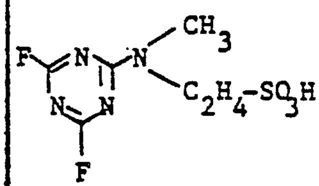 | 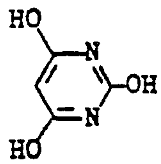 | gelb | 430 |
| 2 | 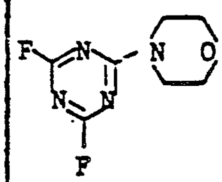 | 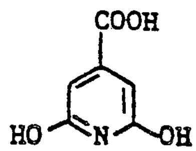 | orange | 460 |
| 1 | 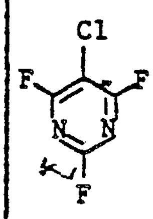 | 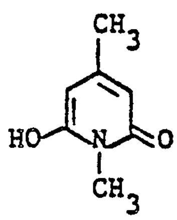 | scharlach | 470 |
| 1 | 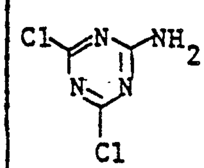 | 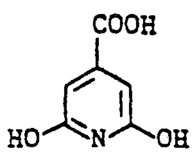 | scharlach | 470 |
| 1 | 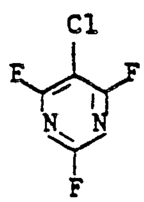 | 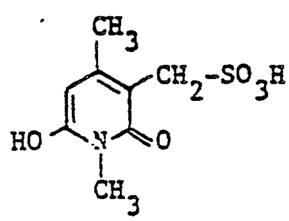 | scharlach | 470 |

**Patentansprüche**

1. Reaktivfarbstoffe der Formel

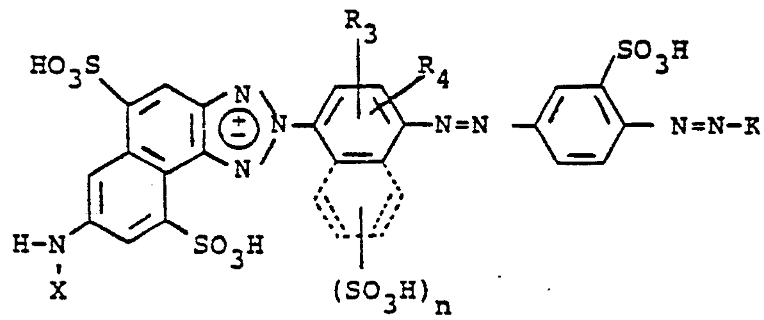

worin
$R_3$, $R_4$ = H, $C_1$-$C_4$-Alkyl, $C_1$-$C_4$-Alkoxy
X = faserreaktiver Rest der Triazin- oder Pyrimidinreihe
K = Rest einer Kupplungskomponente der Pyridon- oder Pyrimidonreihe
n = 0 oder 1.

2. Reaktivfarbstoffe gemäß Anspruch 1 der Formel

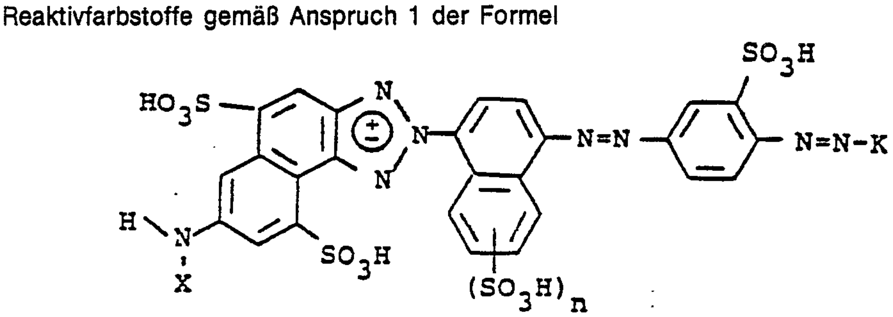

worin X, K und n die in Anspruch 1 angegebene Bedeutung haben.

3. Reaktivfarbstoffe gemäß Anspruch 1 der Formel

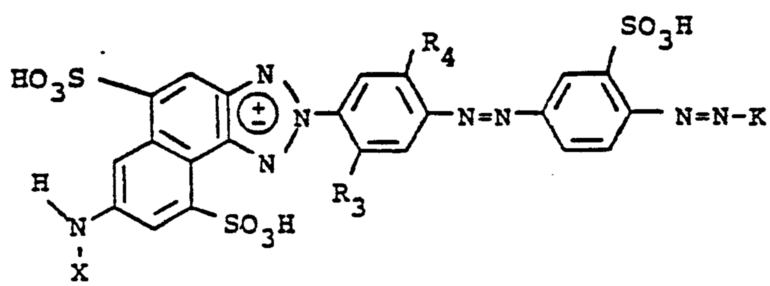

worin X, $R_3$, $R_4$ und K die in Anspruch 1 angegebene Bedeutung haben.

4. Verwendung der Farbstoffe gemäß Anspruch 1 bis 3 zum Färben und Bedrucken von OH- und NHgruppenhaltigen Fasermaterialien.

**Claims**

1. Reactive dyestuffs of the formula

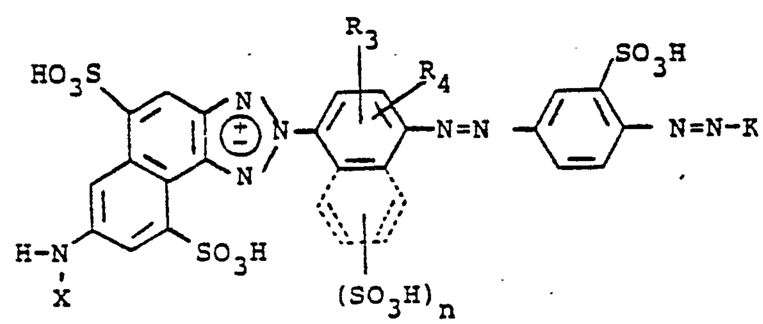

wherein

$R_3$ and $R_4$ = H, $C_1$-$C_4$-alkyl or $C_1$-$C_4$-alkoxy,
X = a fibre-reactive radical of the triazine or pyrimidine series,
K = the radical of a coupling component of the pyridone or pyrimidone series and
n = 0 or 1.

2. Reactive dyestuffs according to Claim 1 of the formula

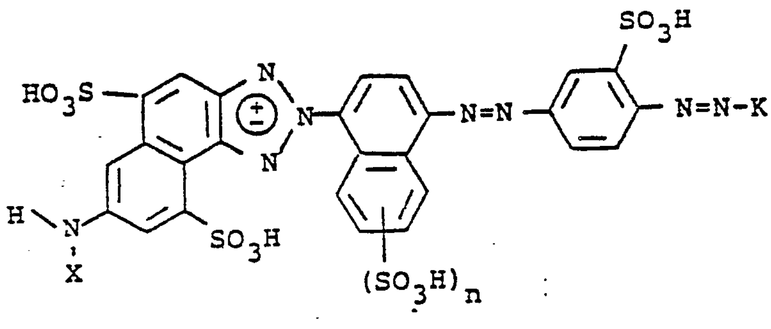

wherein X, K and n have the meaning given in Claim 1.

3. Reactive dyestuffs according to Claim 1 of the formula

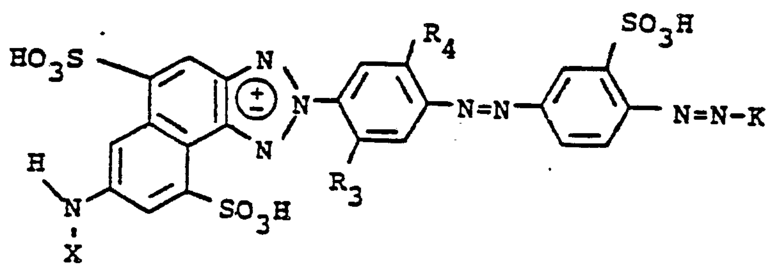

wherein X, $R_3$, $R_4$ and K have the meaning given in Claim 1.

4. Use of the dyestuffs according to Claim 1 to 3 for dyeing and printing OH- and NH-group-containing fibre materials.

**Revendications**

1. Colorants réactifs de formule

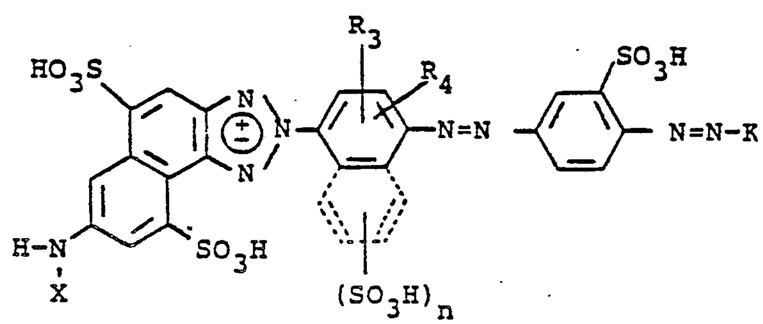

dans laquelle

$R_3$, $R_4$ représentent H, un groupe alkyle en $C_1$ à $C_4$, alkoxy en $C_1$ à $C_4$
X est un reste de la série de la triazine ou de la pyrimidine réactif envers la fibre
K est un reste d'un copulant de la série de la pyridone ou de la pyrimidone
n a la valeur 0 ou 1.

2. Colorants réactifs suivant la revendication 1, de formule

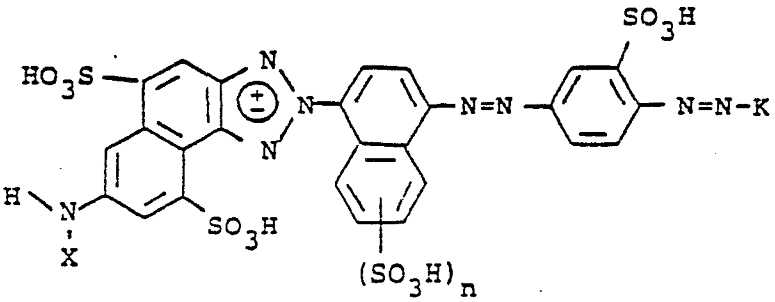

dans laquelle X, K et n ont la définition indiquée dans la revendication 1.

3. Colorants réactifs suivant la revendication 1, de formule

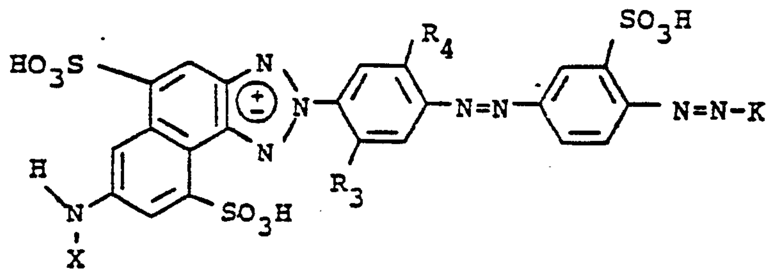

dans laquelle X, $R_3$, $R_4$ et K ont la définition indiquée dans la revendication 1.

4. Utilisation des colorants suivant les revendications 1 à 3 pour la teinture et l'impression de matières fibreuses portant des groupes OH et NH.